**Europäisches Patentamt**

**European Patent Office**

**Office européen des brevets**

(11) Numéro de publication : **0 424 239 B1**

(12) **FASCICULE DE BREVET EUROPEEN**

(45) Date de publication du fascicule du brevet :
**07.12.94 Bulletin 94/49**

(51) Int. Cl.$^5$ : **G10K 11/34,** G01S 15/42

(21) Numéro de dépôt : **90402887.5**

(22) Date de dépôt : **16.10.90**

(54) **Procédé de formation de voies pour sonar.**

(30) Priorité : **20.10.89 FR 8913746**

(43) Date de publication de la demande :
**24.04.91 Bulletin 91/17**

(45) Mention de la délivrance du brevet :
**07.12.94 Bulletin 94/49**

(84) Etats contractants désignés :
**DE GB IT**

(56) Documents cités :
**EP-A- 0 114 547**
**EP-A- 0 142 416**
**EP-A- 0 151 003**
**EP-A- 0 205 355**
**EP-A- 0 211 427**
**DE-B- 1 265 003**

(73) Titulaire : **THOMSON-CSF**
**173, Boulevard Haussmann**
**F-75008 Paris (FR)**

(72) Inventeur : **Doisy, Yves**
**c/o THOMSON-CSF**
**SCPI**
**Cédex 67**
**F-92045 Paris La Défense (FR)**
Inventeur : **Le Gall, André**
**c/o THOMSON-CSF**
**SCPI**
**Cédex 67**
**F-92045 Paris La Défense (FR)**

(74) Mandataire : **Desperrier, Jean-Louis et al**
**THOMSON-CSF**
**SCPI**
**B.P. 329**
**50, rue Jean-Pierre Timbaud**
**F-92402 Courbevoie Cédex (FR)**

EP 0 424 239 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte aux procédés de formation de voies pour sonar, notamment pour les sonars dits de relocalisation qui permettent de localiser précisément un objet précédemment localisé grossièrement par un sonar.

Si alors le sonar de relocalisation est placé dans un matériel consommable, c'est-à-dire un matériel soit détruit soit abandonné après utilisation, le sonar est lui-même détruit ou abandonné. Il faut donc dans ce cas en minimiser le coût, ce qui est rendu possible en particulier en se contentant de caractéristiques inférieures à celles des sonars de localisation et d'identification puisque l'on a déjà des informations importantes sur la localisation et les caractéristiques des cibles.

Typiquement un sonar de relocalisation fonctionne à une fréquence de l'ordre de quelques centaines de kHz, par exemple 500 kHz, avec une portée de quelques dizaines de mètres, par exemple entre 50 et 100 m.

Les performances recherchées sont alors par exemple un secteur d'observation d'environ 60°, une résolution angulaire comprise entre 1° et 2°, et une résolution en distance de l'ordre de 10 cm. En outre la cadence image doit rester relativement élevée, soit 1 image/s au minimum.

Les diverses solutions connues ne permettent pas de remplir ces conditions de manière satisfaisante.

Il est ainsi connu de former des voies à la réception de manière électronique, mais ceci oblige à émettre de manière omnidirectionnelle dans tout le secteur d'observation, ce qui nécessite une puissance électrique élevée. De plus il faut former un grand nombre de voies (plusieurs dizaines) pour obtenir la résolution souhaitée, ce qui oblige à multiplier le matériel et à utiliser une technique de retard, et non de déphasage, en raison des valeurs élevées des dépointages à obtenir. Cette solution est donc très coûteuse.

On sait également faire une antenne d'émission directive satisfaisant à la résolution angulaire souhaitée et qui consomme donc peu d'énergie électrique en raison du gain d'antenne. Cette antenne tourne avec l'antenne de réception, mais on ne peut plus alors obtenir la cadence d'image souhaitée, puisqu'il faut attendre le retour de l'impulsion avant de faire tourner l'antenne de l'incrément correspondant à la résolution.

Il est enfin connu du brevet français 2 553 395, inventeur Georges GRALL, déposé le 25 octobre 1983 par la demanderesse, de réaliser un sonar comportant un empilement d'antennes décalées angulairement et qui déterminent chacune un sous-secteur. Ceci permet de faire tourner cette antenne à une vitesse suffisante pour obtenir la cadence d'image désirée. Toutefois le volume du matériel dans un tel système est important et ne peut être réduit à une valeur raisonnable que pour des fréquences supérieures au MHz.

Pour obtenir un sonar de relocalisation dont les performances satisfont aux besoins, l'invention propose un procédé de formation de voies pour sonar, selon la revendication 1.

D'autres particularités et avantages de l'invention apparaîtront clairement dans la description suivante faite à titre d'exemple non limitatif en regard des figures annexées qui représentent

- la figure 1, le schéma simplifié d'une antenne selon l'invention ;
- la figure 2, le diagramme d'émission de l'antenne de la figure 1 ;
- la figure 3, un diagramme de balayage par sous-secteurs d'une antenne selon l'invention ;
- la figure 4, un diagramme du plan de fréquences d'un sonar selon l'invention ;
- les figures 5 et 6, des vues en plan et de face des antennes d'émission et de réception d'un sonar selon l'invention ; et
- la figure 7, le schéma simplifié de la chaîne de réception d'un sonar selon l'invention.

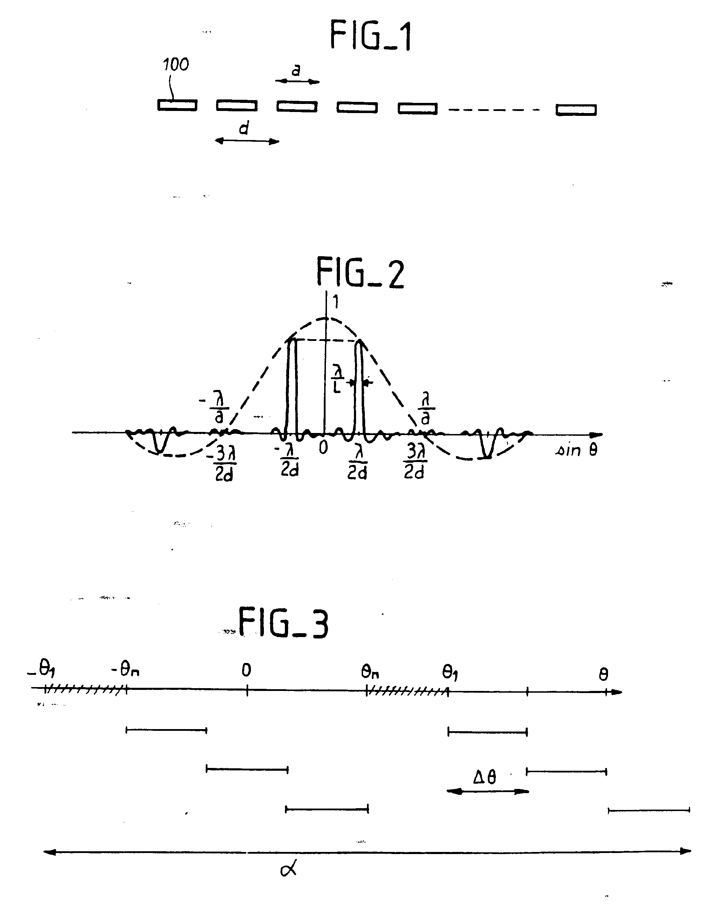

Un sonar selon l'invention comprend une antenne d'émission représentée très schématiquement sur la figure 1. Elle comporte un ensemble de transducteurs élémentaires d'émission 100 de longueur a répartis avec un pas d sur une droite.

Il est connu que la directivité $D(\sin\theta)$ d'une telle émission est donnée en fonction de $\sin\theta$ par la formule :

$$D(\sin\theta) = \frac{\cos(\frac{N\pi d}{\lambda}\sin\theta)}{N\cos(\frac{\pi d}{\lambda}\sin\theta)} \quad (1)$$

On a représenté sur la figure 2 le diagramme de directivité pour cette antenne, dans le cas particulier où la longueur a du transducteur élémentaire est égal au 2/3 du pas p et où on alimente les capteurs adjacents avec des signaux déphasés de ¶, c'est-à-dire en inversant la polarité de l'un à l'autre.

Sur cette figure la ligne en pointillés représente le diagramme de directivité d'un capteur élémentaire, et la ligne en trait plein le diagramme de directivité de toute l'antenne d'émission.

On constate que de cette manière on a supprimé le lobe principal ainsi que les lobes d'ordre ±2 et qu'il ne reste pratiquement plus que les deux lobes d'ordre ±1, ceci quelle que soit la fréquence utilisée.

Selon l'invention, on émet alors au cours d'une même récurrence du sonar une succession d'impulsions à des fréquences différentes qui correspondent pour chaque impulsion à une direction déterminée des deux lobes images d'ordre ±1. On constitue ainsi une succession de voies d'émission qui couvrent tout le champ à explorer en utilisant un plan de fréquence adéquat.

A la réception on utilise deux antennes ayant un lobe d'ouverture large pour couvrir, l'une le secteur à gauche de l'axe central de l'antenne, et l'autre le secteur à droite de cet axe. La discrimination en gisement se fait par discrimination de fréquence sur les échos reçus.

Pour une fréquence $f_i$, la position des deux lobes d'émission est donnée par la relation :

$$\sin \theta_i = \frac{c}{2d\, f_i} \quad (2)$$

En désignant par $f_1$ la fréquence la plus basse d'émission, par $f_n$ la fréquence la plus haute, par $\theta_i$ le plus grand angle de dépointage, et par $\theta_n$ le plus petit angle de dépointage, l'amplitude du balayage angulaire est donnée par la relation :

$$\sin\theta_1 - \sin\theta_n = \frac{f_n - f_1}{f_1 f_n} \times \frac{c}{2d} \quad (3)$$

En posant alors $\theta_1 = \theta_n + \Delta\theta$ cette relation devient :

$$\sin(\theta_n + \Delta\theta)\frac{f_1}{f_n} = \sin\theta_n \quad (4)$$

L'antenne d'émission couvre donc deux champs angulaires symétriques par rapport à l'axe central de l'antenne. Ces deux champs correspondent donc au balayage angulaire des lobes images de $\theta_1$ à $\theta_n$ pour l'un et $-\theta_1$ à $-\theta_n$ pour l'autre, soit une largeur égale à $\Delta\theta$.

Il reste bien évidemment un trou entre ces deux secteurs puisqu'on ne peut pas ramener les lobes images sur l'axe de l'antenne, ce qui correspondrait à une fréquence infinie.

On peut pallier cet inconvénient par différentes dispositions. Parmi celles-ci, un mode de réalisation préférée de l'invention consiste à utiliser une rotation mécanique de l'antenne pour couvrir un secteur d'observation de largeur angulaire $\alpha$.

Pour obtenir alors un recouvrement correct des champs angulaires obtenus par balayage électronique selon l'invention il faut que les paramètres respectent les relations 5, dans lesquels k est un nombre entier.

$$\left.\begin{array}{l} 2\,\theta_n = k\,\Delta\theta \\ \text{et} \quad 2(k+1)\Delta\theta = \alpha \end{array}\right\} \quad (5)$$

On a représenté sur la figure 3 un diagramme explicatif de ces égalités 5 dans le cas où k=3, c'est-à-dire lorsque 3 rotations, chacune de $\Delta\theta$, permettent de couvrir un secteur angulaire d'ouverture $\alpha$. Sur la première ligne on voit la position neutre de l'antenne par rapport à l'axe central 0 du secteur où le balayage électronique permet de couvrir un sous-secteur à gauche compris en $-\theta_n$ et $-\theta_1$ et un sous-secteur à droite compris entre $\theta_n$ et $\theta_1$. Trois rotations mécaniques vers la droite permettent de balayer jusqu'à l'extrémité droite du secteur $\alpha$. Les rotations s'enchaînent de la gauche vers la droite puis de la droite vers la gauche sans interruption ni retour en arrière avant l'extrémité du secteur.

On sait par ailleurs que la largeur d'un lobe à -3dB d'atténuation, que ce soit le lobe principal ou un lobe image, d'une antenne de longueur L fonctionnant à la fréquence $f_i$ est telle que, c étant la vitesse du son dans l'eau :

$$\delta_i (\sin\theta) = \frac{0,9c}{f_1 L} \quad (6)$$

La résolution angulaire désirée correspond à une largeur maximale $\delta(\sin\theta)$, ce qui permet de définir la longueur L de l'antenne :

$$L = \frac{0,9C}{f_1\, \delta(\sin\theta)} \quad (7)$$

Les formules 2, 4, 5 et 7 permettent donc de définir entièrement la géométrie de l'antenne d'émission à partir des paramètres déterminés par les données suivantes :

- la portée D, qui fixe la fréquence maximum $f_n$ ;
- le facteur de qualité des transducteurs Q qui fixe la fréquence minimum $f_1$ à partir de la relation :

$$Q = \frac{f_1 + f_n}{2(f_n - f_1)} \quad (8)$$

- le secteur d'observation souhaité, qui fixe $\alpha$ ; et
- la résolution angulaire en gisement, qui fixe $\delta\sin(\theta)$.

Comme k doit être un entier, il y a lieu de réaliser un compromis entre les valeurs de $\alpha$, de $f_1$, et de $f_n$.

Dans la pratique on part généralement de la valeur de $\alpha$, on en déduit $\theta_n$ et $\Delta\theta$, puis on ajuste la valeur de $\frac{f_1}{f_n}$ en respectant la valeur minimale de Q.

Dans un exemple de réalisation numérique, on désire surveiller un secteur d'ouverture $\alpha=60°$ avec une portée maximale de 70m et une résolution $\delta(\sin\theta)$ sensiblement égale à 1,2° en utilisant des transducteurs qui permettent d'obtenir un facteur de qualité Q=2. Dans ces conditions on obtient

$$f_n = 825 \text{ kHz}, f_1=500 \text{ kHz}, \frac{f_1}{f_n} = 0,607$$

$$\theta_n = 11,25°, \theta_1 = 18,75°, \theta = 7,5° \text{ et } k=3.$$

La longueur L de l'antenne est alors égale à 14cm et et le pas d à 4,67 mm ce qui correspond à N=31 transducteurs.

L'antenne d'émission est donc formée de 31 transducteurs de longueur 3,11 mm espacés de 4,67 mm.

La hauteur des transducteurs est, quant à elle, déterminée par la directivité en site souhaitée à la fréquence centrale de la gamme utilisée (662,5 kHz). Pour une largeur de lobe vertical égale à 1 radian par exemple, on obtient une hauteur de 2 mm pour les transducteurs.

La cadence de rafraîchissement des images est déterminée à partir de la fréquence de récurrence des émissions et de la durée de rotation de l'antenne. Cette cadence de récurrence est égale à $\frac{2D}{c}$ et, si $T_r$ est la durée de rotation sur $\Delta\theta$, la cadence des images est donnée par la formule :

$$(k + 1)\frac{2D}{c} + kT_r \quad (9)$$

Le temps de rotation dépend du moment d'inertie de l'ensemble mobile constitué par les antennes et le moteur qui les entraîne, et de la puissance de ce moteur. Avec un moment d'inertie qui ne dépasse pas 1kg/cm2 et un moteur d'une puissance d'environ 4 Watts, on peut facilement arriver à obtenir une cadence de 50 ms par rotation en utilisant ce moteur, qui est par exemple du type pas-à-pas, en régime "start-stop". Dans ces conditions le sens de rotation en bout de course de l'ensemble mobile s'inverse sans problème.

Dans l'exemple numérique décrit plus haut, pour k=3 et D=70 m, on peut donc obtenir une cadence image de 570 ms, qui est bien inférieure à la cadence de 1 seconde généralement considérée comme nécessaire pour obtenir une image facilement exploitable par l'opérateur.

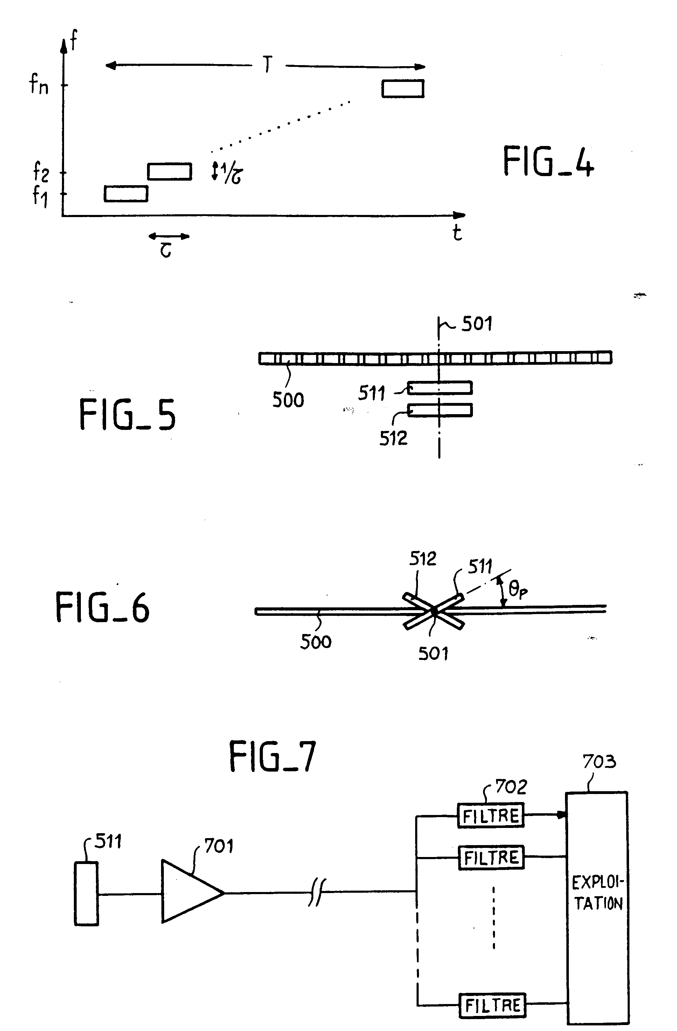

On a représenté sur la figure 4 le diagramme temporel du plan de fréquences des émissions d'un sonar selon l'invention.

Au début de chaque récurrence, pendant une durée T, chaque transducteur émet une série d'impulsion dont les fréquences centrales $f_i$ s'échelonnent entre $f_1$ et $f_n$ et qui durent chacune une durée $\tau$. Cette durée est déterminée par la résolution en distance désirée $\delta r$ à partir de la formule :

$$\frac{1}{\tau} = \frac{c}{2\,\delta r} \quad (10)$$

Ces fréquences centrales $f_i$ sont obtenues en déterminant l'espacement entre les lobes d'émission pour que ceux-ci se recoupent à un niveau déterminé, par exemple 3dB d'atténuation au plus.

Si on désigne par $\delta_i^x(\sin\theta)$ la largeur d'un lobe à x décibels d'atténuation, la condition de recoupement à ce niveau d'atténuation de deux lobes d'émission adjacents s'écrit :

$$1/2 \left[ \delta_i^x (\sin\theta) + \delta_{i+1}^x (\sin\theta) \right] = \sin\theta_i - \sin\theta_{i+1} \quad (11)$$

Comme $\sin\theta_i = \frac{c}{2df_i}$ et

$\delta_i^x(\sin\theta) = \frac{mc}{Lf_i}$ où m est égal à 0,9 pour x=-3dB, on obtient la relation :

$$f_{i+1} = \frac{1 + md/L}{1 - md/L} f_i \quad (12)$$

Cette relation correspond à une progression géométrique $f_{i+1}=rf_i$ avec une raison :

$$r = \frac{1 + md/L}{1 - md/L}$$

Dans ces conditions $f_n=r^{n-1}f_1$ et on obtient donc le nombre n de fréquence entre $f_1$ et $f_n$ en partant de la valeur m correspondant à l'atténuation du recouvrement entre lobes. Pour obtenir un recoupement au moins égal à -3dB, on arrondi à l'entier supérieur la valeur de n obtenue pour m=0,9.

Dans l'exemple de réalisation numérique décrit plus haut, on obtient n=10. En effectuant alors le calcul à l'envers, on retrouve m=0,838 et un recoupement des lobes à -2,67dB. Le plan de fréquences ainsi obtenu est donné dans le tableau suivant :

| $f_i$ kHz | 500 | 528,6 | 558,9 | 590,8 | 624,6 | 660,4 | 698,2 | 738,1 | 780,4 | 825 |
|---|---|---|---|---|---|---|---|---|---|---|
| $\theta_i$ ° | 18,75 | 17,7 | 16,71 | 15,79 | 14,91 | 14,09 | 13,31 | 12,58 | 11,89 | 11,25 |

Toujours dans le cadre de cet exemple de réalisation numérique, pour une résolution de 10cm la durée $\tau$ de chaque impulsion est égale à 0,13ms et donc la durée totale de l'émission $\tau$ à 1,33ms. Dans ces conditions le produit $f_i\tau$ est toujours grand et au minimum égal à 67, ce qui veut dire que l'impulsion comprend un nombre suffisant d'arches de sinusoïdes pour que la fréquence soit considérée comme sensiblement pure.

On remarquera bien que le plan de fréquence donné ici ne représente qu'un mode de réalisation de l'invention et que l'on peut, sans sortir du cadre de celle-ci, utiliser d'autres valeurs de $f_i$, qui comportent par exemple un niveau de recoupement entre lobes variable avec l'indice i.

On a représenté sur les figures 5 et 6 respectivement une vue de face et une vue de dessus de l'ensemble des antennes d'émission et de réception d'un sonar selon l'invention.

Ces antennes sont fixées sur un axe de rotation 501 avec les transducteurs de l'antenne d'émission 500 alignés selon un axe longitudinal. Les antennes de réception 511 et 512, prévues pour recevoir respectivement les lobes images d'ordre -1 et +1 situés à gauche et à droite de l'axe d'émission de l'antenne 500, sont décalées chacune d'un angle $\theta_p$ par rapport à l'axe longitudinal de l'antenne d'émission, qui est lui-même perpendiculaire à l'axe d'émission.

Cet angle $\theta_p$ est déterminé, en conjugaison avec la longueur $L_r$ de cette antenne pour que le lobe de réception de l'antenne permette une réception avec mieux que -3dB d'atténuation entre tous les échos de fréquence $f_1$ à $f_n$ compris dans le sous-secteur de réception déterminé par $\sin\theta_1$ et $\sin\theta_n$.

La longueur $L_r$ est déterminée par la formule :

$$\frac{0,9c}{L_r\left(\frac{f_1 + f_n}{2}\right)} \geq \Delta\sin\theta \qquad (13)$$

la direction $\theta_p$ est alors donnée par :

$$\sin\theta_p = \sin\theta_n + \frac{0,9c}{2L_rf_n} \qquad (14)$$

Dans l'exemple de réalisation numérique décrit dans ce texte, on obtient une longueur $L_r$ = 1,61 cm et un angle de pointage $\theta_p$ égal à 14,23°.

Ces antennes de réception peuvent être constituées d'une seule pièce de céramique piézoélectrique de longueur $L_r$ et de hauteur identique à celle des transducteurs de l'antenne d'émission.

Elles peuvent aussi être formées de plusieurs transducteurs jointifs, ce qui permet d'appliquer à ces transducteurs des pondérations permettant d'abaisser le niveau des lobes secondaires de réception.

On a représenté sur la figure 7 un schéma très simplifié de l'une des deux chaînes de réception d'un sonar selon l'invention, correspondant à l'antenne de réception 511.

Derrière cette antenne un préamplificateur à large bande 701 permet d'amplifier les signaux de réception en les limitant à l'intervalle de fréquence $f_n$ - $f_1$. Des moyens non représentés sur la figure permettent d'inhiber cet amplificateur lorsque l'émission se produit. Ce temps d'inhibition est très court devant la durée totale de la récurrence, ce qui permet de n'obtenir qu'une zone aveugle réduite devant le sonar. Dans l'exemple numérique décrit plus haut le temps d'inhibition est égal à 1,33 ms alors que la récurrence dure 93 ms.

La sortie du préamplificateur 701 est reliée à une batterie de n filtres en peigne tels que 702. La largeur de bande de chacun de ces filtres est égale à $\frac{1}{\tau}$ et elle est centrée sur l'une des fréquences centrales d'émission $f_i$. L'espacement entre ces fréquences d'émission est suffisant pour s'affranchir des imperfections des filtres ainsi que du décalage Doppler éventuel, qui est par exemple égal à 1,65 kHz pour une émission à 825 kHz et une vitesse relative de 3 noeuds.

Les sorties de ces filtres 702 sont alors appliquées à des organes d'exploitation 703, qui permettent par exemple de visualiser sur un écran cathodique les échos reçus en fonction de la voie dans laquelle ils sont reçus.

A titre de variante, on pourrait coder l'émission des fréquences et remplacer la batterie des filtres par une

5

batterie de corrélateurs fonctionnant avec le code d'émission. Ce code d'émission peut être par exemple une modulation de fréquence autour de $f_i$ dans une bande

$$B \ = \frac{c}{2\delta r} \ \mathrm{avec}\,\tau \gg \frac{1}{B}.$$

Ceci revient à faire du traitement cohérent selon une technique connue.

Il n'est pas utile dans certains cas de surveiller un secteur très étendu, et l'on peut par exemple se contenter d'un secteur d'ouverture égal à $\Delta\theta$. Dans ce cas on peut n'utiliser qu'un seul lobe d'émission avec une seule antenne de réception pointée dans la direction $\theta_p$ et sans utiliser de balayage mécanique de cet ensemble. Il sera par contre utile d'utiliser une pondération de l'antenne de réception pour abaisser le niveau des lobes secondaires de réception afin de ne pas être gêné par le deuxième lobe image d'émission, qui est toujours présent.

## Revendications

1. Procédé de formation de voies pour sonar, dans lequel on utilise une antenne d'émission constituée d'un ensemble de transducteurs (100) de longueur a alignés sur une distance L, caractérisé en ce que ces transducteurs sont disposés avec un pas d tel que a = (2/3) d et que l'on alimente les transducteurs adjacents avec des signaux dont la polarité est inversée de l'un à l'autre, ces signaux étant fournis pour chaque récurrence par des impulsions à des fréquences ($f_1$ - $f_n$) étagées de telle manière que les lobes images correspondant à ces fréquences remplissent deux sous-secteurs symétriques par rapport à l'axe de l'antenne et occupant chacun un angle $\theta$.

2. Procédé selon la revendication 1, caractérisé en ce que l'on reçoit les échos de l'un au moins des sous-secteurs avec une antenne de réception (511) dont le lobe principal de réception couvre ce sous-secteur.

3. Procédé selon l'une quelconque des revendications 1 et 2, caractérisé en ce que le jeu de fréquences ($F_1$ - $f_n$) est déterminé pour que les lobes images correspondant à deux fréquences adjacentes se recoupent à un niveau correspondant à une valeur -x dB.

4. Procédé selon l'une quelconque des revendications 1 à 3, caractérisé en ce que l'on fait tourner mécaniquement l'ensemble des antennes du sonar (500, 511, 512) autour d'un axe (501) permettant de couvrir un secteur d'ouverture formé d'un ensemble de sous-secteurs d'ouverture $\theta$ sensiblement jointifs sur la totalité du secteur principal.

5. Procédé selon l'une quelconque des revendications 1 à 3, caractérisé en ce que l'on ne reçoit les échos que d'un seul des deux sous-secteurs avec une seule antenne de réception (511); l'ensemble des antennes (500, 511) du sonar étant fixe.

6. Procédé selon la revendication 5, caractérisé en ce que l'antenne de réception (511) est pondérée pour éliminer la réception des échos de l'autre sous-secteur d'émission.

7. Procédé selon l'une quelconque des revendications 1 à 6, caractérisé en ce que l'on code les fréquences émises et que l'on sépare les fréquences reçues par un procédé de corrélation.

8. Procédé selon la revendication 7, caractérisé en ce que le code émis est une modulation de fréquence autour de la centeale $f_i$ correspondant à chaque lobe.

## Patentansprüche

1. Verfahren zur Bildung von Strahlbündeln für Sonar, bei dem eine Sendeantenne verwendet wird, die aus einer Gruppe von über eine Strecke L ausgerichteten Wandlern (100) mit einer Länge a besteht, dadurch gekennzeichnet, daß diese Wandler mit einem Schritt d wie a = (2/3)d angeordnet sind, und daß die nebeneinanderliegenden Wandler mit Signalen gespeist werden, deren Polarität gegeneinander umgekehrt ist, wobei diese Signale für jede Folgeperiode durch Impulse mit Frequenzen (f1 - fn) geliefert werden, die so abgestuft sind, daß die diesen Frequenzen entsprechenden Bildkeulen zu der Achse der Antenne symmetrisch sind und jeweils einen Winkel $\theta$ einnehmen.

2. Verfahren nach Anspruch 1, dadurch gekennzeichnet, daß die Echos wenigstens eines der Subsektoren mit einer Empfangsantenne (511) empfangen werden, deren Hauptempfangskeule diesen Subsektor abdeckt.

3. Verfahren nach einem der Ansprüche 1 und 2, dadurch gekennzeichnet, daß der Satz von Frequenzen $(F_1 - f_n)$ so bestimmt ist, daß sich die zwei nebeneinanderliegenden Frequenzen entsprechenden Bildkeulen auf einer Höhe schneiden, die einem Wert -x dB entspricht.

4. Verfahren nach einem der Ansprüche 1 bis 3, dadurch gekennzeichnet, daß man die Gesamtheit der Antennen des Sonars (500, 511, 512) mechanisch um eine Achse (501) drehen läßt, die es ermöglicht, einen Öffnungssektor abzudecken, der aus einer Gruppe von Subsektoren mit einer Öffnung $\theta$ gebildet ist, die im wesentlichen über den gesamten Hauptsektor aneinandergrenzen.

5. Verfahren nach einem der Ansprüche 1 bis 3, dadurch gekennzeichnet, daß nur die Echos eines einzigen der beiden Subsektoren mit einer einzigen Empfangsantenne (511) empfangen werden, wobei die Gesamtheit der Antennen (500, 511) des Sonars feststehend ist.

6. Verfahren nach Anspruch 5, dadurch gekennzeichnet, daß die Empfangsantenne (511) gewichtet ist, um den Empfang der Echos des anderen Sendesubsektors zu eliminieren.

7. Verfahren nach einem der Ansprüche 1 bis 6, dadurch gekennzeichnet, daß die gesendeten Frequenzen codiert und die empfangenen Frequenzen durch ein Korrelationsverfahren getrennt werden.

8. Verfahren nach Anspruch 7, dadurch gekennzeichnet, daß der gesendete Code eine Frequenzmodulation um die jeder Keule entsprechende Bandmittenfrequenz $f_i$ ist.

## Claims

1. Process of channel formation for sonar, in which use is made of a transmitting antenna consisting of an assembly of transducers (100) of length a aligned over a distance L, characterized in that these transducers are arranged with a spacing d such that a = (2/3)d and that the adjacent transducers are fed with signals whose polarity is inverted from one to the other, these signals being provided for each recurrence by pulses at frequencies $(f_1 - f_n)$ staged in such a way that the image lobes corresponding to these frequencies fill two sub-sectors which are symmetric with respect to the axis of the antenna and each occupying an angle $\theta$.

2. Process according to Claim 1, characterized in that the echoes from one at least of the sub-sectors are received with a receiving antenna (511) whose main receiving lobe covers this sub-sector.

3. Process according to either one of Claims 1 and 2, characterized in that the set of frequencies $(f_1 - f_n)$ is determined so that the image lobes corresponding to two adjacent frequencies intersect at a level corresponding to a value -x dB.

4. Process according to any one of Claims 1 to 3, characterized in that the assembly of antennas of the sonar (500, 511, 512) is rotated mechanically about an axis (501) allowing coverage of an aperture sector formed by an assembly of sub-sectors of aperture $\theta$ which are substantially adjoining over the entirety of the main sector.

5. Process according to any one of Claims 1 to 3, characterized in that the echoes from only a single of the two sub-sectors are received with a single receiving antenna (511); the assembly of the antennas (500, 511) of the sonar being fixed.

6. Process according to Claim 5, characterized in that the receiving antenna (511) is weighted to eliminate reception of the echoes from the other transmitting sub-sector.

7. Process according to any one of Claims 1 to 6, characterized in that the transmitted frequencies are coded and in that the received frequencies are separated through a correlation process.

8. Process according to Claim 7, characterized in that the transmitted code is a frequency modulation about the central $f_i$ corresponding to each lobe.

# FIG_1

100

a

d

# FIG_2

1

$-\dfrac{\lambda}{a}$

$\dfrac{\lambda}{L}$

$\dfrac{\lambda}{a}$

$-\dfrac{3\lambda}{2d}$  $-\dfrac{\lambda}{2d}$  $0$  $\dfrac{\lambda}{2d}$  $\dfrac{3\lambda}{2d}$

$\sin\theta$

# _FIG_3

$-\theta_1$  $-\theta_n$  $0$  $\theta_n$  $\theta_1$  $\theta$

$\Delta\theta$

$\alpha$

FIG_4

FIG_5

FIG_6

FIG_7

EXPLOI-
TATION

FILTRE